# EUROPÄISCHE PATENTSCHRIFT

(11) **EP 0 491 168 B1**
(45) Veröffentlichungstag und Bekanntmachung des Hinweises auf die Patenterteilung: **12.06.1996**
(21) Anmeldenummer: 91119589.9
(22) Anmeldetag: 16.11.1991
(51) Int. Cl.: B65G 15/58, B65G 21/20

(54) **Transportanlage für Stückgut, insbesondere für in Schachteln oder in Folie verpackte Stückgutteile**
Transporting installation for goods, in particular goods packed in boxes or foils
Installation de transport pour des objets, notamment des objets emballés en caisses ou en feuilles

(30) Priorität: 15.12.1990 DE 4040231
(43) Veröffentlichungstag der Anmeldung: 24.06.1992
(73) Patentinhaber: OSTMA Maschinenbau GmbH, D-53909 Zülpich (DE)
(72) Erfinder: Odenthal, Heinz F., W-5352 Zülpich (DE)
(74) Vertreter: Andrejewski, Walter, Dr.

(56) Entgegenhaltungen:
- GB-A- 885 556
- US-A- 2 416 690
- US-A- 3 737 019

## Beschreibung

Die Erfindung betrifft eine Transportanlage für Stückgut, insbesondere für in Schachteln oder in Folie verpackte Stückgutteile, - mit einem Zuführförderer und einem Abführförderer, wobei der Abführförderer an den Zuführförderer mit einem Laufrichtungsänderungswinkel angeschlossen ist und die einzelnen Stückgutteile auf dem mit konstanter Transportgeschwindigkeit arbeitenden Zuführförderer mit Taktabstand ankommen. Der Laufrichtungsänderungswinkel beträgt vorzugsweise aber nicht beschränkend 90°. Eine derartige Transportanlage ist aus der GB-A-0 885 556 bekannt. - Bei Transportanlagen des eingangs beschriebenen Aufbaus und der eingangs beschriebenen Zweckbestimmung kommt es darauf an, daß die einzelnen Stückgutteile, die auf dem Zuführförderer mit einem vorgegebenen Abstand, dem Taktabstand, ankommen, von dem Abführförderer wohlorientiert und mit einem Abstand, der nach Maßgabe der Transportgeschwindigkeit des Abführförderers von dem Taktabstand der Stückgutteile auf dem Zuführförderer vorgegeben ist, abstandsgenau abgeführt werden.

Besitzen die Stückgutteile in bezug auf den Abführfördergurt einen ausreichenden Reibungskoeffizienten, so kann die Übergabe ohne große Schwierigkeiten orientierungsgenau und abstandsgenau erfolgen, wobei im allgemeinen mit Hilfseinrichtungen gearbeitet wird, die eine entsprechende Übergabe bewirken. Dazu gehören auch Hilfsförderbänder, Anschlagleisten und Schieber. Der bekannte Abführförderer ist mit einem Saugförderband ausgerüstet, wobei an dem Abführförderer im Anschlußbereich des Zuführförderers eine Anschlagleiste angeordnet ist.

Der Erfindung liegt die Aufgabe zugrunde, eine Transportanlage des eingangs beschriebenen Aufbaus so weiter auszubilden, daß die Anlage bei hoher Transportgeschwindigkeit des Zuführförderers und hoher Taktzahl ebenso funktionssicher arbeitet, wie bei verhältnismäßig geringer Geschwindigkeit des Zuführförderers und entsprechend geringer Taktzahl, und zwar auch bei geringer Reibung zwischen dem Stückgut und dem Abführfördergurt.

Diese Aufgabe wird durch die Merkmale des Anspruchs 1 gelöst. - Die Erfindung nutzt die Tatsache, daß ein Saugförderband ein Stückgutteil unmittelbar nach Aufnahme des Stückgutteils festhalten kann. Bei erfindungsgemäßen Transportanlagen gelangen die Stückgutteile gleichsam nach Maßgabe einer durch die Saugkraft des Saugförderbandes beeinflußten Wurfbahn auf den Abführförderer und damit auf das Saugförderband. Der Abführförderer ist tiefer angeordnet als der Zuführförderer, so daß die Wurfübergabe störungsfrei erfolgen kann. In Abhängigkeit von der Transportgeschwindigkeit des Zuführförderers ist dabei der Abführförderer mit seinem Saugband mehr oder weniger tief angeordnet. Jedenfalls müssen die Verhältnisse so getroffen werden, daß die einzelnen Stückgutteile an der Anschlagleiste orientierbar und dabei oder danach in orientierten Stellung von dem Unterdruck des mit konstanten Transportgeschwindigkeit arbeitenden Saugförderbandes festsetzbar sind. Der Abstand der einzelnen Stückgutteile auf dem Abführförderer und damit auf dem Saugförderband ist durch den Taktabstand der Stückgutteile auf dem Zuführförderer bestimmt. Es versteht sich, daß der Abstand der einzelnen Stückgutteile auch durch die Geschwindigkeit des Abführförderers bestimmt ist. Auch der Zuführförderer kann als Saugförderer ausgebildet sein.

Wird die erfindungsgemäße Transportanlage so ausgelegt, daß sowohl der Zuführförderer als auch der Abführförderer mit sehr unterschiedlichen Transportgeschwindigkeiten arbeiten können, so empfiehlt die Erfindung, daß die Höhe des Abführförderers in bezug auf den Zuführförderer einstellbar ist. In diesem Zusammenhang empfiehlt es sich fernerhin, die Anordnung so zu treffen, daß der Abstand des Abführförderers von dem Abwurf des Zuführförderers, einstellbar ist. Eine bevorzugte Ausführungsform der Erfindung, die insoweit einen automatischen Betrieb in bezug auf die Einstellung der Betriebsverhältnisse zuläßt, ist dadurch gekennzeichnet, daß eine Steuereinrichtung zugeordnet ist, mit der die Positionierung des Abführförderers in bezug auf die Arbeitshöhe und in bezug auf den Übergabeabstand vom Zuführförderer nach Maßgabe der Transportgeschwindigkeit des Zuführförderers automatisch einstellbar ist.

Im folgenden wird die Erfindung anhand einer lediglich ein Ausführungsbeispiel darstellenden Zeichnung ausführlicher erläutert. Es zeigen in schematischer Darstellung
- Fig. 1: eine Draufsicht auf eine erfindungsgemäße Transportanlage,
- Fig. 2: eine Ansicht des Gegenstandes der Fig. 1 aus Richtung des Pfeiles A.

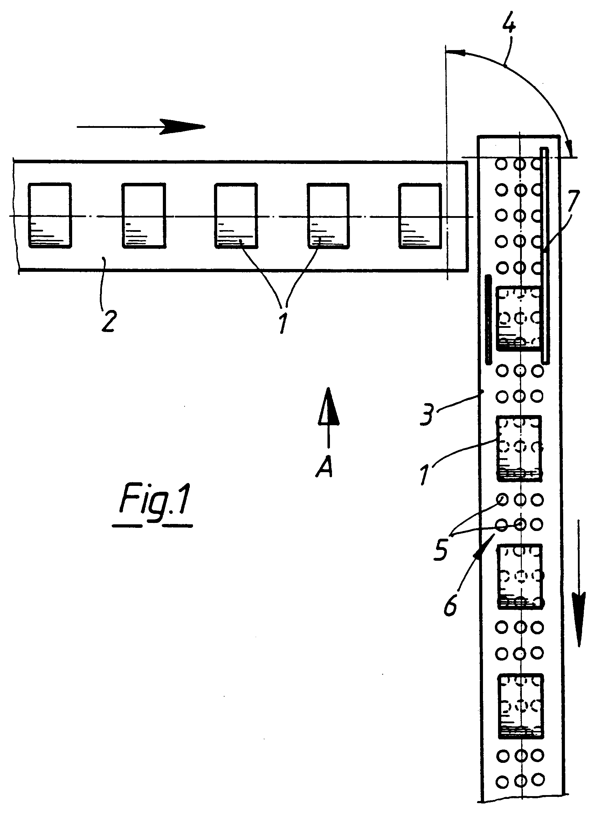

Die in den Figuren dargestellte Transportanlage ist für Stückgut 1, insbesondere für in Schachteln oder in Folie verpackte Stückgutteile 1, bestimmt. Zum grundsätzlichen Aufbau gehören ein Zuführförderer 2 und ein Abführförderer 3. Der Abführförderer 3 ist an den Zuführförderer 2 mit einem Laufrichtungsänderungswinkel 4 angeschlossen, der im Ausführungsbeispiel 90° beträgt aber auch anders gewählt sein kann. Die einzelnen Stückgutteile 1 kommen auf dem mit konstanter Transportgeschwindigkeit arbeitenden Zuführförderer 2 mit Taktabstand an, wie es in der Fig. 1 dargestellt wurde. In der Fig. 1 verdeutlichen Pfeile die Transportrichtung und die Transportgeschwindigkeit des Zuführförderers 2 und des Abführförderers 3.

Durch übertrieben groß gezeichnete Ausnehmungen 5 wurde in der Fig. 1 angedeutet, daß der Abführförderer 3 mit einem Saugförderband 6 ausgerüstet ist. Das bedeutet, daß sich unter dem Saugförderband 6 Unterdruckkammern befinden und folglich die Umgebungsluft über die dargestellten Öffnungen in die Unterdruckkammern eingesaugt und abgeführt wird. Dadurch kann ein Saugförderband 6 aufliegende Stückgutteile 1 festhalten, und zwar insbesondere dann, wenn es sich um in Kartons oder in Folie verpackte Stückgutteile handelt, die eine ebene Auflagefläche aufweisen. Man erkennt in der Fig. 1, daß an dem Abführförderer 3 im Anschlußbereich des Zuführförderers 2 eine Anschlagleiste 7 angeordnet ist. Die von dem Zuführförderer 2 dem Abführförderer 3 zu übergebenden einzelnen Stückgutteile 1 sind an der Anschlagleiste 7 orientierbar und werden dabei oder danach in orientierter Stellung von dem Unterdruck des mit konstanter Transportgeschwindigkeit arbeitenden Saugförderbandes 6 festgehalten und damit festgesetzt. Folglich werden die einzelnen Stückgutteile 1 wohlorientiert und mit vorgegebenem Abstand von dem Saugbandförderer 6 weitertransportiert, wie es die Fig. 1 andeutet.

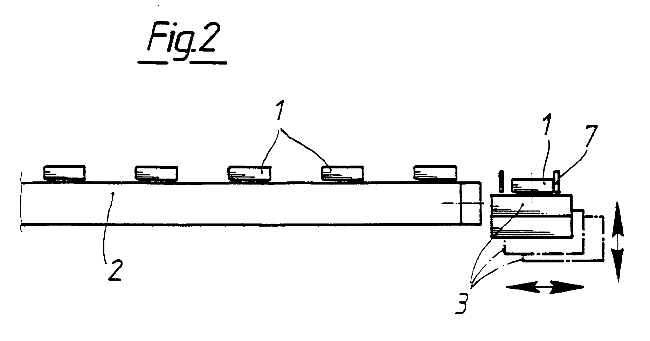

In der Fig. 2 verdeutlichen Doppelpfeile, daß der Abführförderer 3 tiefer gestellt werden kann oder auch von dem Abwurf des Zuführförderers 2 mit weiterem Abstand angeordnet werden kann, und zwar in der Fig. 2 nach rechts hin. Strichpunktiert sind einige solche Stellungen angedeutet worden. Das erlaubt es, das Saugförderband 6 so anzuordnen, daß die Stückgutteile 1, die von dem Zuführförderer 2 abgeworfen werden, nach Maßgabe einer Wurfbahn an die Anschlagleiste 7 gelangen und an dieser orientiert und gleichzeitig von dem Saugförderband 6 festgehalten werden. Die Einrichtung im einzelnen kann unter Berücksichtigung der Reibungsverhältnisse nach Maßgabe der Transportgeschwindigkeit des Zuführförderers 2 ohne Schwierigkeiten vorgenommen werden, und zwar auch mit Hilfe einer nicht gezeichneten automatischen Steuereinrichtung.

## Patentansprüche

1. Transportanlage für Stückgut, insbesondere für in Schachteln oder in Folie verpackte Stückgutteile (1), - mit
einem Zuführförderer (2) und einem Abführförderer (3), der tiefer angeordnet ist als der Zuführforderer (2),
wobei der Abführförderer (3) an den Zuführförderer (2) mit einem Laufrichtungsänderungswinkel angeschlossen ist und die einzelnen Stückgutteile (1) auf dem mit konstanter Transportgeschwindigkeit arbeitenden Zuführförderer (2) mit Taktabstand ankommen, wobei der Abführförderer (3) mit einem Saugförderband (6) ausgerüstet ist und an dem Abführförderer (3) im Anschlußbereich des Zuführförderers (2) eine Anschlagleiste (7) angeordnet ist, wobei die von dem Zuführförderer (2) dem Abführförderer (3) nach Maßgabe einer durch die Saugkraft des Saugförderbandes (6) beeinflußten freien Wurfbahn übergebenen einzelnen Stückgutteile (1) an der Anschlagleiste (7) orientierbar und dabei oder danach in orientierter Stellung von dem Unterdruck des mit konstanter Transportgeschwindigkeit arbeitenden Saugförderbandes (6) festsetzbar sind.

2. Transportanlage nach Anspruch 1, dadurch gekennzeichnet, daß die Höhe des Abführförderers (3) in bezug auf die des Zuführförderers (2) einstellbar ist.

3. Transportanlage nach einem der Ansprüche 1 oder 2, dadurch gekennzeichnet, daß der Abstand des Abführförderers (3) vom Abwurf des Zuführförderers (2) einstellbar ist.

4. Transportanlage nach einem der Ansprüche 1 bis 3, dadurch gekennzeichnet, daß eine Steuereinrichtung zugeordnet ist, mit der die Positionierung des Abführförderers (3) in bezug auf die Arbeitshöhe und in bezug auf den Übergabeabstand vom Zuführförderer (2) nach Maßgabe der Transportgeschwindigkeit des Zuführförderers (2) automatisch einstellbar ist.

## Claims

1. A transportation system for merchandise and especially merchandise units (1) packaged in boxes or foil, containing
a feed conveyor (2) and an exit conveyor (3), being positioned lower than the feed conveyor (2),
in which the exit conveyor (3) is connected to the feed conveyor (2) at a direction changing angle and the individual merchandise units (1) arrive on the constant speed feed conveyor (2) at set intervals, the exit conveyor (3) contains a suction conveyor belt (6), a stop guide (7) is arranged along the exit conveyor (3) at the end connecting to the feed conveyor (2) and the individual merchandise units (1) are dropped from the feed Conveyor (2) onto the exit conveyor (3) in a free fall influenced by the suction power of the suction conveyor belt (6) are then straightened by the stop guide (7) and held at the same time or thereafter in a straight position by the vacuum of the suction conveyor belt (6) running at constant speed.

2. A transportation system according to claim 1, **characterised** in that the height of the exit conveyor (3) is adjustable in relation to the height of the feed conveyor (2).

3. A transportation system according to claims 1 or 2, **characterised** in that the distance between the exit conveyor (3) and the drop-off end of the feed conveyor (2) is adjustable.

4. A transportation system according to claims 1 to 3, **characterised** in that it contains a control device for automatically adjusting the positioning of the exit conveyor (3) with regards to working height and transfer distance from the feed conveyor (2) depending on the transportation speed of the feed conveyor (2).

## Revendications

1. Installation de transport pour marchandises en colis, en particulier pour des marchandises de détail (1) emballées dans des boîtes ou sous cellophane, - avec
un convoyeur d'amenée (2) et un convoyeur de sortie (3) qui est disposé à un niveau plus bas que le convoyeur d'amenée (2),
le convoyeur de sortie (3) étant raccordé au convoyeur d'amenée (2) avec un angle de changement de marche et les différentes marchandises de détail (1) se trouvant sur le convoyeur d'amenée, fonctionnant à une vitesse de transport constante, arrivent à une cadence précise, le convoyeur de sortie (3) étant équipé d'une bande transporteuse à aspiration (6) et d'une règle de butée (7) dans la zone de jonction au convoyeur d'amenée (2), les différentes marchandises de détail (1) transmises du convoyeur d'amenée (2) au convoyeur de sortie (3) étant orientables au niveau de la règle de butée (7) en fonction d'une trajectoire libre influencée par la force d'aspiration de la bande transporteuse à aspiration (6) et pouvant ainsi ou ensuite être maintenues en position orientée par le vide de la bande transporteuse à aspiration (6) fonctionnant à une vitesse de transport constante.

2. Installation de transport selon la revendication 1, **caractérisée par le fait** que la hauteur du convoyeur de sortie (3) est réglable par rapport à celle du convoyeur d'amenée (2).

3. Installation de transport selon l'une des revendications 1 ou 2, caractérisée par le fait que la distance du convoyeur de sortie (3) est réglable à partir du transfert du convoyeur d'amenée (2).

4. Installation de transport selon l'une des revendications 1 à 3, **caractérisée par** l'affectation d'un dispositif de commande permettant de régler automatiquement le positionnement du convoyeur de sortie (3) par rapport à la hauteur utile et à la distance de transmission à partir du convoyeur d'amenée (2), et ce en fonction de la vitesse de transport du convoyeur d'amenée (2).
